# EUROPEAN PATENT SPECIFICATION

(11) **EP 0 365 893 B1**
(45) Date of publication and mention of the grant of the patent: **21.04.1993**
(21) Application number: 89118581.1
(22) Date of filing: 06.10.1989
(51) Int. Cl.: A01B 59/043, B60D 1/00

(54) **A tractor hitch for mounted and semimounted implements**
Schlepperkupplung für Anbau- oder Aufsattelgaräte
Attelage de tracteur pour outils montés et semi-montés

(30) Priority: 26.10.1988 IT 2242688
(43) Date of publication of application: 02.05.1990
(73) Proprietor: CARRARO S.P.A., I-35011 Campodarsego (Padova) (IT)
(72) Inventor: Pasquali, Luciano, I-35010 Arsego (Padova) (IT)
(74) Representative: Cantaluppi, Stefano

(56) References cited:
- FR-A- 2 365 282
- FR-A- 2 379 976
- FR-A- 2 511 574

## Description

This invention relates to a tractor hitch for coupling mounted and semi-mounted implements to a tractor, being of a type which comprises a pair of lengthwise extending arms each having a ball joint at one end for connecting the corresponding arm to the tractor and a connector device at the opposed end, for the implement to be mounted or towed.

As is known, today's agricultural tractors are equipped with hitch systems for raising and towing implements; the most widely used of these is the so-called three-point hitch which comprises an adjustable link and two arms pivoted on the tractor and associated with a lifting mechanism.

Connector devices are provided at the free ends of the lift arms and the link which are usually of the ball-joint kind, for connection to a desired implement. To this aim, the implement is also provided with suitable connectors.

In addition, to prevent the implement from swinging sideways too far, either in the working or travel positions thereof, it is customary to provide adjustable stays or chains which exert a constraint on the two arms.

A typical example of similar hitches is disclosed by FR-A-2365282, which discloses the features of the preamble of claim 1.

For convenience in exchanging implements between tractors, agricultural implement connectors are classed into standard design categories which are primarily distinguishable by a different distance between the lower connectors of the implement intended for coupling to the two arms of the three-point hitch.

Accordingly, to make implements from different categories fit any one tractor, the stays or chains which restrain the sideways swing of the arms must be adjusted such that the distance between the ball-joints of the connectors be substantially equal to the distance between the lower connectors of the implement to be mounted or towed.

Despite its apparent simplicity, this operation is fairly laborious because said stays or chains are located close to the rear wheels of the tractor, that is, where they are relatively difficult to get at. The operation may be further hampered by the tractor having to be brought close to the implement for hitching and/or by muddy, fouled, rusty, or other conditions apt to restrict the operability of the members used for adjusting the tension on the stays or chains.

Where wide gauge implements, e.g. from category II or III, are to be attached to narrow tread tractors, such as orchard or vineyard tractors, on which the maximum spread of the two lower arms is restricted by the outline of the rear end, it may be even necessary to replace the lower arms of the three-point hitch with suitably shaped arms to avoid interference with the rear wheels of the tractor.

The problem underlying this invention is to provide a hitch for mounted and semi-mounted implements, especially designed for installation on agricultural tractors and structured to be readily adaptable to accomodate implements from different categories, thereby solving the problems with which the cited prior art is beset.

This problem is solved by a hitch as indicated being characterized in that at least one of the connector devices is shiftable in an adjustable manner on its respective arm along a transverse direction to the arm longitudinal direction.

A hitch including connector devices which are adjustably shiftable in a transverse direction is known from FR-A-2379976.

The connector devices are, in this case, mounted on a rigid frame wherein no other adjusting possibility in the same transverse direction is offered other than shifting the devices.

Advantageously, said at least one connector device is removably attached laterally to its respective arm by the intermediary of a spacer which can be turned over on said arm so as to either present said connector device on one or the other side of said arm.

The features and advantages of this invention will become more clearly apparent from the following detailed description of a preferred, though not exclusive, embodiment thereof, shown by way of example in the accompanying drawings, where:
Figure 1 is a schematical perspective view of the rear of an agricultural tractor equipped with a three-point hitch embodying the invention;

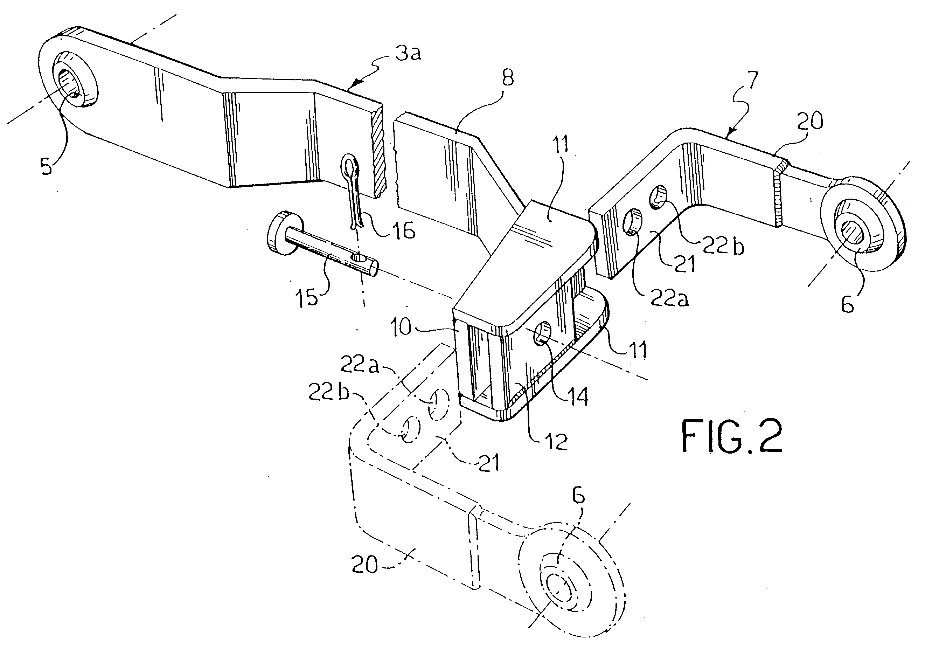

Figure 2 is a perspective detail view of the hitch shown in Figure 1; and

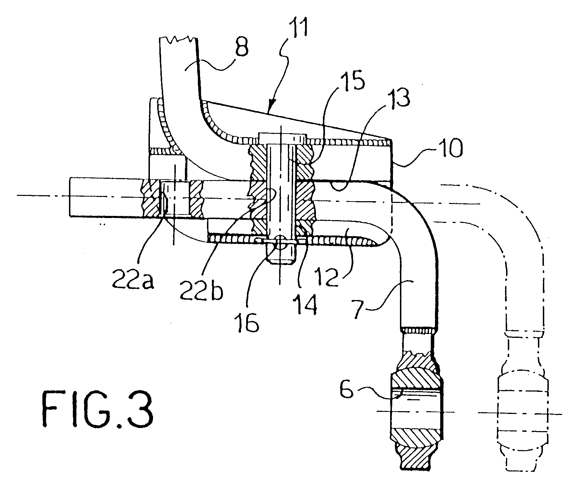

Figure 3 is a sectional detail view of the hitch shown in the previous figures.

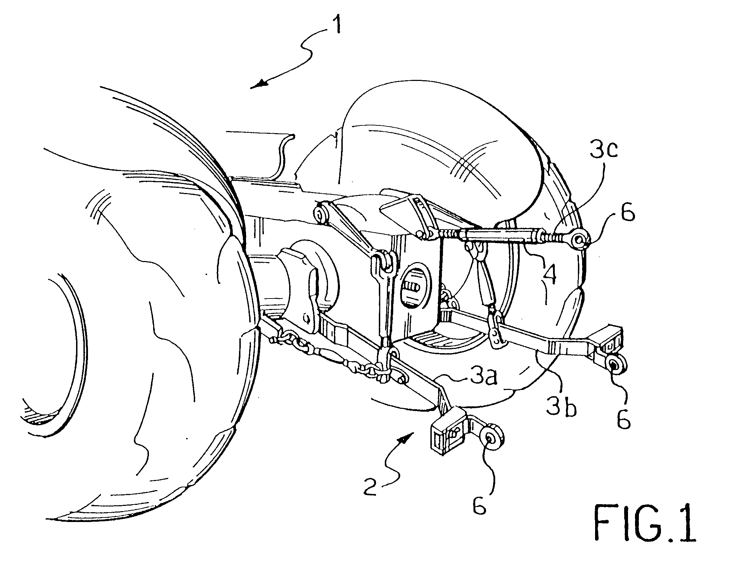

Indicated at 1 in Figure 1 is an agricultural tractor, of which only the rear is shown which carries a three-point hitch generally designated 2.

The hitch 2 comprises two arms 3a,b of fixed length, and a strut 3c whose length can be adjusted by means of a bottle screw 4. One end of the arms 3a,b and the strut 3c is secured pivotally to the tractor 1 by means of ball-joints 5. Similar ball-joints 6 are provided on the free ends of the arms 3a,b and the strut 3c to form a connector device for an agricultural mounted and/or towed implement. The joints 6 may be associated with conventional quick-action connector devices well-known in the art.

At least one of the arms 3a,b, but preferably both arms, is constructed in first and second sections 7 and 8, respectively.

The second arm section 8 is secured to the tractor 1 by the ball-joint 5 and has its free end 10 bent crosswise outwards from the longitudinal direction of its corresponding arm 3a,b.

Welded to the end 10 are two parallel plates 11 joined by a bridging member 12 to form a box-type socket 13 which is open at two opposing sides along said transverse direction.

A through-going hole 14 for a pin 15 locked by a cotter pin 16 is provided through the end 10 and the bridging member 12.

The first arm section 7 is bent to a right angle to define first and second portions 20 and 21, respectively, thereof.

The free end of the portion 20 carries a swivel connector device 6, and two holes 22a,b are provided through the portion 21, which portion is adapted to fit into the box-type socket 13 formed on the end 10 of the second section 8.

To set up the hitch 2 of this invention for coupling to an agricultural implement having fixed connectors of category I, for example, the two sections 7 of the arms 3a,b are first coupled to the free ends of their respective sections 8 so as to be facing each other as shown in Figure 1. That is, the sections 7 function as spacers to hold their respective swivelling connector devices 6 offset to one side from their corresponding sections 8.

Each portion 21 of a section 7 is inserted into the box-type socket 13 formed by the plates 11 and the bridging member 12, and is held in place by passing the pin 15 through the holes 14 and 22a.

The distance between the swivelling connector devices 6 is now minimal and corresponds with the distance setting for implements from connection category I.

When the tractor is to be set up for connection to category II implements, the cotter pin 16 is first removed and the pin 15 then taken out to allow the first section 7 to be slid through the box-type socket 13 until the holes 14 are brought to register with the hole 22b in the portion 21 of the section 7.

To hook the tractor to an implement with category III connectors, the pin 15 is taken out after removing the cotter pin 16 lock, thereafter the first section 7 can be slid off the box-type socket 13 on the end 10 of the second section 8. The sections 7 are then turned over 180° outwards from their respective arms 3a,b, and re-inserted with the portion 21 into the box-type socket formed on the end 10 of the second section 8, to which they can be locked by means of the pin 15.

Thus, the operations involved in adapting a tractor for coupling to implements from category I, II or III can be made significantly simpler, with no need for changing the setting of stays or chains intended to restrict the swinging movement of the two arms 3a,b.

An additional advantage of the invention is that, if a suitable clearance is allowed between the pin 15 and the holes in which it is to be received, no jamming or impediment will be experienced in changing the tractor hitch setting despite the presence of mud, dirt and rust.

## Claims

1. A tractor hitch for coupling mounted and semi-mounted implements to a tractor, comprising a pair of lengthwise extending arms (3a,b) each having a ball joint (5) at one end for connecting the corresponding arm to the tractor and a connector device (6) at the opposed end, for the implement to be mounted or towed, characterized in that at least one of the connector devices (6) is shiftable in an adjustable manner on its respective arm (3a,b) along a transverse direction to the arm longitudinal direction;

2. A hitch according to Claim 1, characterized in that at least one of said arms is constructed in two sections (7,8) which are removably interconnected and shiftable relatively to each other along a transverse direction to the longitudinal direction of their respective arm (3a,b).

3. A hitch according to Claim 2, characterized in that a first section (7) carrying said device (6) constitutes a spacer for holding said connector device (6) offset sideways from a second section (8), said first section (7) being adapted to be turned over relatively to the second section (8) so as to carry said connector device (6) laterally on one side or the other with respect to the second section (8).

4. A hitch according to Claim 3, characterized in that formed on the free end of said second section (8) is a box-type socket (13) open on two opposing sides transversely to said longitudinal direction, said first section (7) being configured as two portions substantially at right angles to each other and one of which can be inserted removably into said socket (13) through both said open sides.

## Patentansprüche

1. Schlepperkupplung für Anbau- oder Aufsattelgeräte, mit einem Paar von sich in Längsrichtung erstreckenden Armen (3a, 3b), von denen jede an einem Ende eine Kugelverbindung (5) aufweist, um das betreffende Ende mit dem Schlepper zu verbinden und mit einer Verbindungsvorrichtung (6) am anderen Ende für das anzubauende oder zu ziehende Gerät,
dadurch **gekennzeichnet,**
daß wenigstens eine der Verbindungsvorrichtungen (6) an ihrem jeweiligen Arm (3a, 3b) einstellbar in einer Richtung verschiebbar ist, die zur Längsrichtung des Armes quer verläuft.

2. Schlepperkupplung nach Anspruch 1, dadurch gekennzeichnet, daß wenigstens einer der Arme (3a, 3b) in zwei Armabschnitte (7, 8) unterteilt ist, die abnehmbar miteinander verbunden sind und die relativ zueinander in einer Richtung verschiebbar sind, die zur Längsrichtung des jeweiligen Armes (3a, 3b) quer verläuft.

3. Schlepperkupplung nach Anspruch 1, dadurch gekennzeichnet, daß ein erster Armabschnitt (7), der die Vorrichtung (6) trägt, einen Abstandshalter zum Halten der Verbindungsvorrichtung (6) seitlich versetzt vom zweiten Armabschnitt (8) darstellt, wobei der erste Armabschnitt (7) dazu geeignet ist, relativ zum zweiten Armabschnitt (8) so umgedreht zu werden, daß er die Verbindungsvorrichtung (6) seitlich an der einen oder anderen Seite in bezug auf den zweiten Armabschnitt (8) trägt.

4. Schlepperkupplung nach Anspruch 3, dadurch gekennzeichnet, daß am freien Ende des zweiten Armabschnittes (8) eine kastenartige Muffe (13) angeformt ist, die quer zur genannten Längsrichtung an beiden einander gegenüberliegenden Seiten offen ist, wobei der erste Armabschnitt (7) aus zwei Abschnitten besteht, die im wesentlichen im rechten Winkel zueinander stehen und von denen einer entfernbar in die Muffe (13) durch beide, offene Seiten eingeschoben werden kann.

## Revendications

1. Attelage de tracteur destiné à l'accouplement d'instruments portés et semi-portés à un tracteur, comprenant une paire de bras longitudinaux (3a, 3b) ayant chacun une articulation à rotule (5) à une première extrémité destinée au raccordement du bras correspondant au tracteur et un dispositif (6) de raccordement à l'extrémité opposée pour le montage ou le remorquage de l'instrument, caractérisé en ce que l'un au moins des dispositifs de raccordement (6) peut être déplacé de manière réglable sur son bras respectif (3a, 3b) dans la direction transversale à la direction longitudinale du bras.

2. Attelage selon la revendication 1, caractérisé en ce que l'un des bras au moins est construit sous forme de deux tronçons (7, 8) qui sont raccordés de façon amovible et peuvent être décalés l'un par rapport à l'autre en direction transversale à la direction longitudinale du bras respectif (3a, 3b).

3. Attelage selon la revendication 2, caractérisé en ce qu'un premier tronçon (7) portant le dispositif (6) de raccordement constitue une entretoise destinée à maintenir le dispositif de raccordement (6) en position décalée latéralement par rapport à un second tronçon (8), le premier tronçon (7) étant destiné à être retourné par rapport au second tronçon (8) afin qu'il porte le dispositif de raccordement (6) latéralement d'un côté ou de l'autre par rapport au second tronçon (8).

4. Attelage selon la revendication 3, caractérisé en ce qu'un logement (13) de forme parallélépipédique est formé à l'extrémité libre du second tronçon (8) et débouche des deux côtés opposés transversalement dans la direction longitudinale, le premier tronçon (7) ayant une configuration comprenant deux parties sensiblement perpendiculaires l'une à l'autre et dont l'une peut être introduite de façon amovible dans le logement (13) par les deux côtés ouverts.
